# EUROPEAN PATENT SPECIFICATION

(11) **EP 4 275 859 B1**
(45) Date of publication and mention of the grant of the patent: **05.03.2025**
(21) Application number: 22172704.3
(22) Date of filing: 11.05.2022
(51) Int. Cl.: B29C 45/00, B29C 45/14, G01P 1/02, B29C 69/00

(54) **METHOD FOR SEALING OF AN INSERT AGAINST MEDIA AND MOLDED PART**
VERFAHREN ZUM ABDICHTEN EINES EINSATZES GEGEN MEDIEN UND FORMTEILE
PROCÉDÉ D'ÉTANCHÉIFICATION D'UN INSERT CONTRE LE SUPPORT ET PIÈCE MOULÉE

(43) Date of publication of application: 15.11.2023
(73) Proprietor: TE Connectivity Germany GmbH, 64625 Bensheim (DE)
(72) Inventor: GLASER, Karlheinz, 64625 Bensheim (DE); GOESSNER, Felix, 67346 Speyer (DE)
(74) Representative: Grünecker Patent- und Rechtsanwälte PartG mbB

(56) References cited:
- DE-A1- 102009 047 051
- DE-A1- 102013 211 511

## Description

The invention relates to a method for sealing of an insert against media in an over-molded housing.

A tight housing, which has an insert with assembled components inside, can be manufactured by an over-molding process. The over-molded housing (which is also referred to as molded housing or housing), seals the insert against media such as fluids or particles. A fluid may be a liquid or a gas. A particle may be for example dust. A liquid may comprise for example water and/or oil As generally known, liquid proof and in particular waterproof can provide protection against dripping liquid, spraying liquid, splashing liquid, jetting liquid (nozzle), or against temporary submersion. The kind of protection is, for example, defined by the Ingress Protection Code (IPC). In particular, for water IP classes are defined. For other liquids, such as oil, corresponding IPCs may be defined. For gases, a leakage rate may be defined. For particles, a particle rate may be defined.

The insert according to the present description is preferably a part for holding an electrical component. Known over-molding process do not lead to a tight, i.e. waterproof, housing. In particular, the problem is that the insert must be positioned in the over-molding tool by means such as a contact element. Thus, the contact element is touching at one or various areas the tool. In those regions, which are referred to as touchpoint, an over-molding of the insert is not possible.

Further, the insert delaminates from the over-molded housing. Delamination is a mode of failure where a material fractures into layers. A variety of materials including laminate composites can fail by delamination. For example, over-molding processes create layers that can delaminate.

As discussed above, the insert is held by the contact element. The touchpoint of the contact element is not over-molded. Thus, the over-molding processes do not lead to a tight housing. For example, liquids such as water and/or particle can enter between the delaminated layers.

It is known to use primer technics on the insert, special surface structures on a surface of the insert, special contact elements, such as retractable pins in a molding tool, coating of the housing, melting rips at the insert, or the like.

However, the above discussed existing technologies are not offering an appropriate solution for more tight housing. In particular, the electrical component may require protection according to a specific IPC. An object of the invention is to provide a solution for an improved sealing against media such as fluids, e.g. water, or particles, e.g. dust.

Further, the electronic component may be used in harsh environments, e.g. must withstand high temperature changes or mechanical loads. For example, the wheel of a vehicle may be provided with a rotation sensor for determining based on rotational speed the pressure level of the wheel. An electrical component installed close to a wheel may experience a plurality of thermal cycles, and thus, the above discussed known technics may not sufficiently seal the insert over the lifetime of the sensor. A further object of the invention is to provide a solution for an improved sealing that can be used under harsh environmental conditions.

Further, sensors for vehicles are mass products, and thus, need to be fabricated economically. It is therefore advantageous to use known process technologies that are readily available. A further object of the invention is to provide a solution for an improved sealing that can be used fabricated economically.

DE 10 2013 211511 A1 relates to a method for producing a printed conductor grid.

DE 10 2009 047051 relates to a conductor track lead frame which is designed to conduct electrical currents, wherein the conductor track lead frame has a core element which has at least one first region coated with a plurality of plastic layers and at least one second region which serves to contact an additional component.

At least one of objects is solved by the independent claims. Advantageous embodiments are solved by the dependent claims.

The invention is set out in the appended set of claims.

In particular, the present disclosure proposes welding an insert to an over-molded housing to form a fusion zone for joining the insert and the over-molded housing. In other words, after the insert has been over molded, the layered structure is welded to seal the insert from the touchpoint.

As used in the present disclosure, welding is a fabrication process that joins materials, usually metals or thermoplastics, by using high heat to melt the parts together and allowing them to cool, causing fusion. Welding is distinct from lower temperature techniques such as brazing and soldering, which do not melt the base metal. The fusion zone allows waterproof sealing of the insert in the over-molded housing. In particular, the fusion zone is stable even under harsh environmental conditions.

As used herein, waterproof defines a certain tightness as for example defined by the Ingress Protection Code (IPC).

Further, the present discloses proposes using a radiation source for welding. This allows for laser or electron beam welding. Laser welding is a welding technique used to join pieces of metal or thermoplastics by the use of a laser. The beam provides a concentrated radian energy source, allowing for narrow, deep welds and high welding rates. The process is frequently used in high volume applications using automation, as in the automotive industry.

Equipment for e.g. thermoplastic Laser-welding using e.g. red or infrared light, which covers wavelength larger equal 630 nm and less equal 1100 nm, e.g. λ = 980 nm wave length. Such lasers are well established in the market and thus is a readily available technology that is globally available.

Further, as used in the present description, the fusion zone comprises a reversible material. The reversible material is to be melt when heated by the radiation source. Then, the reversible material is cured to seal the insert from the contact element, for example by cooling.

For example, the reversible material can be provided by the insert, and/ the over-molded housing, and/or a part provided in addition to the insert and the over-molded housing.

In more detail, the reversible material is a material that changes a property reversible by temperature. In particular, the reversible material may be melting upon heating with a radiation source. When cooling, the reversible material freezes. Further, the reversible material may expand upon heating and contract upon cooling.

As used in the present description, heat is generated by using the radiation source for welding. Radiation beam welding enables that a predetermined region can be heated while the remaining part of the tool is not heated. This enables reducing process time, costs and protect heat sensitive parts mounted on the insert to be heated.

Upon heating, the reversible material changes its property to melt. The molten material enables to cohesively or adhesively attach to the insert and to the over-molded material. Adhesion is the tendency of dissimilar particles or surfaces to cling to one another. Cohesion refers to the tendency of similar or identical particles/surfaces to cling to one another. Thus, the reversible molten material, which is heated with the radiation source, allows connecting the insert to the over-molding by using the reversible material.

Further, the processes comprise a curing step. As used in the present description, the curing occurs by freezing, i.e. hardening, the liquified molten material, e.g. by cooling. Thus, the curing of the reversible material allows to make the connection permanent.

Additionally, curing may use chemical processes employed in polymer chemistry and process engineering that produces the toughening or hardening of a polymer material by cross-linking of polymer chains. Heat, radiation, electron beams, or chemical additives can for example initiate curing.

Examples of a reversible material are a metal or a thermoplastic. A thermoplastic, or thermosoft plastic, is a plastic polymer material that becomes pliable or moldable at a certain elevated temperature and solidifies upon cooling. The polymer chains associate by intermolecular forces, which weaken rapidly with increased temperature, yielding a viscous liquid. In this state, thermoplastics may be reshaped and are typically used to produce parts by various polymer processing techniques such as injection molding, compression molding, calendaring, and extrusion.

An example of an irreversible material is a thermoset, which forms irreversible chemical bonds during a curing process. In particular, thermosets do not melt when heated, but typically decompose and do not reform upon cooling.

Further, before welding the insert in the over-molded housing, the insert is over-molded.

As used in the description, molding is the process of manufacturing by shaping liquid or pliable raw material using a rigid frame called a mold or matrix. The raw material is for example, a thermoplastic. Over-molding means that a part, here the insert, is covered in the molding process by the raw material. In particular, the part to be over-molded comprises an insert and a contact element. The insert is adapted to carry components to be layered by the raw molding material used during the over-molding. A touchpoint of the contact element is used for holding the part at a molding tool, e.g. a molding cavity. Thus, over-molding allows the insert to be enclosed by the raw material.

Holding the insert with the touchpoint means that the insert is, for example, clamped or fixed or the like to position the insert in the molding tool, e.g. a molding cavity.

As discussed above, the touchpoint of the contact element cannot be over-molded. By the welding step, the fusion zone is created after the over-molding process. The fusion zone joins the insert to the over-molded housing. Further, the fusion zone enables to seal the insert from the touchpoint of the contact element.

### Materials for the welding process

According to an aspect, the insert comprises or consists of a first reversible material. Such a configuration enables that the first reversible material can be provided by the insert. Additionally or alternatively, the over-molded housing comprises or consists of a second reversible material. Such a configuration enables that the second reversible material can be provided by the molded housing. In particular, using first and second reversible material enables that both materials can be melting and thus the fusion zone can comprise both materials, which enables a particular strong connection.

In other words, a first faying surface of the insert is liquified and a second faying surface of the over-molded housing is liquefied. As used herein, a faying surface is one of the surfaces that are in contact at a joint.

The first reversible and the second reversible material may be identical or different. At least one of the first reversible and the second reversible material may be a thermoplastic. In particular, the insert may comprise a thermoplastic as the reversible material.

### Details of the over-molding process

In general, reversible material, and in particular thermoplastics, can be reshaped and are typically used to produce parts by various polymer processing techniques such as injection molding, compression molding, calendaring, and extrusion. Such processes may be used to fabricate the over-molded housing.

According to one aspect, the over-molding step further comprises a step of injecting the molding material in a molding cavity of the molding tool for enclosing the insert, the insert being hold, during the injecting step, in the molding cavity at the touchpoint and curing the molding material to form the over-molded housing.

Injection molding can be performed with a host of materials mainly including metals, glasses, elastomers, confections, and most commonly thermoplastic and thermosetting polymers. Further, a plurality of forms can be used.

Additionally, the material of the over-molding housing can be heated before curing, for example in the molding cavity. Additionally or alternatively, the molding material can be heated before injecting in the material in the molding cavity. In particular, such a process step is optimized for reversible materials such as thermoplastics for fabricating the over-molding housing.

In more detail, thermoplastics are prevalent for injection molding due to characteristics such as ease of recycling, versatility for a wide variety of applications, and ability to soften and flow on heating. Thermoplastics also have an element of safety over thermosets; if a thermosetting polymer is not ejected from the injection barrel in a timely manner, chemical crosslinking may occur causing the screw and check valves to seize and potentially damaging the injection molding machine.

Additionally or alternatively, the insert is fabricated by a molding process. Such a configuration allows a particular economic fabrication for the insert, in particular providing an insert comprising a reversible material comprising or consisting of a thermoplastic, which may be subject of the welding process.

### Details of the insert and over-molded housing

According to the present invention, the welding step further comprises guiding radiation emitted by the radiation source through a transparent layer and absorbing the radiation emitted by the radiation source in an opaque layer. Such an arrangement allows that the fusion zone is protected by the transparent layer, and thus, allows for a particular robust connection.

In particular, the over-molded housing comprises the transparent layer for guiding the light to the opaque layer comprised in the insert. Thus, the insert may be directly heated, and thus, cause the reversible material to melt. Such a configuration allows for an improved quality assurance. In particular, the connection quality of the fusion zone can be determined via the transparent layer by optical devices.

According to a further aspect, the reversible material is opaque for radiation emitted by the radiation source so that the reversible material is directly heated by absorbing the radiation of the radiation source. This may increase the processing speed, namely by directly melting the reversible material. Advantageously, the insert comprises the opaque reversible material.

Additionally, the radiation source emits light with a wavelength larger equal 630 nm and less equal 1100 nm. This arrangement allows the use of commercially available laser devices as radiation sources.

### Details of a pressing step used during welding

In order to provide a particularly strong connection, the method may comprise the step of pressing, during the welding step, the over-molding housing to the insert to reduce a gap between the molding housing and the insert in a welding region.

Additionally, the method may comprise the step of providing a transparent element, during pressing the molded housing to the insert, and guiding radiation emitted by the radiation source through the transparent element. Such an arrangement allows a compact set-up for using the welding step in combination with the pressing step.

### Details of a molded part

According to an aspect, a molded part for waterproof sealing an electrical component solves the above discussed objects. In particular, the molded part comprises an insert for holding the electrical component. Further, the molded part comprises a contact element for positioning the insert in a molding cavity during an over-molding process. Further, the molded part comprises an over-molded molded housing enclosing the insert for protecting the electrical component.

Further, the molded part comprises a fusion zone comprising a reversible material. The fusion zone joins the insert to the molded housing to seal the insert from the contact element. Such an arrangement allows to seal the electrical components.

In particular, the electrical component is for example a lead frame or a magnet. The electrical component may be used for generating a wheel seed sensor for an anti-lock braking system (ABS).

Further, the over-molded housing comprises a transparent layer for guiding light of a radiation source to an opaque layer comprised in the insert for absorbing radiation of the radiation source. Such a configuration allows it to protect the fusion zone by the transparent layer.

In particular, the transparent layer transmits light with a wavelength larger equal 630 nm and less equal 1000 nm and the opaque layer absorbs light with a wavelength larger equal 630 nm and less equal 1000 nm. Such an arrangement is optimized for using readily available lasers. Further, such an arrangement improves the quality of the connection, for example, by allowing control by quality assurances measuring devices operated in the optical wavelength regime. In other words, it can be optically determined if the fusion zone is joining the insert and the over-molded housing.

According to a further aspect, the fusion zone comprises material of the insert. Additionally or alternatively, the fusion zone comprises material of the over-molded housing. This enables a particular strong connection between the reversible material and at least one of the over-molded housing and the insert.

According to a further aspect, the fusion zone abuts and/or surrounds the contact element. As discussed above, the contact element comprising the touchpoint is not covered by the over-molded housing. Such a configuration is particularly efficient, in particular if the contact element is a pin extending from a surface of the insert and the fusion zone forms a closed path on the surface of the insert around the pin.

### Detailed description

The invention will now be described in greater detail and in an exemplary manner using advantageous embodiments and with reference to the drawings. The described embodiments are only possible configurations in which, however, the individual features as described above can be provided independently of one another or can be omitted.

The accompanying drawings are incorporated into the specification and form a part of the specification to illustrate several embodiments of the present invention. These drawings, together with the description serve to explain the principles of the invention. The drawings are merely for the purpose of illustrating the preferred and alternative examples of how the invention can be made and used and are not to be construed as limiting the invention to only the illustrated and described embodiments. Furthermore, several aspects of the embodiments may form-individually or in different combinations-solutions according to the present invention. The following described embodiments thus can be considered either alone or in an arbitrary combination thereof. The described embodiments are merely possible configurations and it must be borne in mind that the individual features as described above can be provided independently of one another or can be omitted altogether while implementing this invention. Further features and advantages will become apparent from the following more particular description of the various embodiments of the invention, as illustrated in the accompanying drawings, in which like references refer to like elements, and wherein:
- **FIG. 1**: is a flow diagram of a method according to an aspect;
- **FIG. 2**: is a schematic view of process step S3 of Fig. 1;
- **FIG. 3**: is a schematic view of process step S5 of Fig. 1;
- **FIG. 4**: is a detailed flow diagram of process step S5;
- **FIG. 5**: is a schematic view of a molded part after process step S5 of Fig. 1;
- **FIG. 6**: is a schematic view of process step S7 of Fig. 1;
- **FIG. 7**: is a schematic view of a molded part after process step S7 of Fig. 1;
- **FIG. 8**: is an alternative schematic view of process step S7 of Fig. 1;
- **FIG. 9**: is an alternative schematic view of process step S7 of Fig. 1;
- **FIG. 10**: is a schematic view of an additional process step;
- **FIG. 11**: is a schematic view of an additional process step;
- **FIG. 12**: is a view of a molded part;
- **FIG. 13**: is a detail of Fig. 12;
- **FIG. 14**: is a sectional view of Fig. 12
- **FIG. 15**: is a further alternative schematic view of process step S7 of Fig. 1; and
- **FIG. 16**: is a further alternative schematic view of process step S7 of Fig. 1.

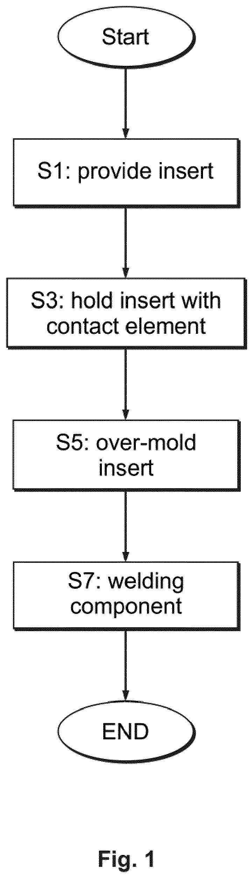

The present invention will now be explained in more detail with reference to the Figures. Referring to Fig. 1, a flow diagram of a method according to an aspect is described.

The method starts for example with method step S1: providing an insert. The insert being for example fabricated by a molding process, such as injection molding. In particular, the insert can comprise a reversible material such as a thermoplastic. The insert can be an isolating part for isolating electronic components. The insert can hold an electronic component such as a lead frame or a magnet. The electronic components may be used for a wheel speed sensor.

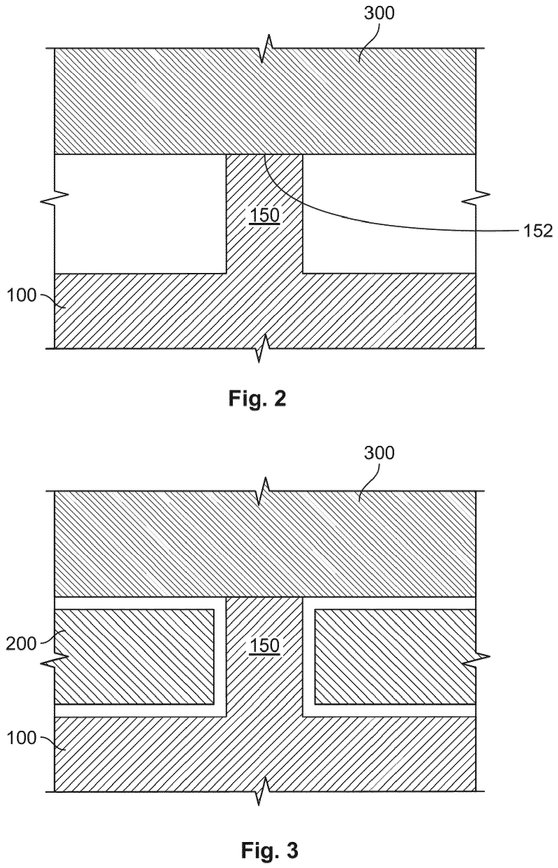

The method can comprise method step S3: holding the insert with a contact element to place the insert in a molding tool. In particular, Fig. 2 shows the insert 100 that is hold by the contact element 150 in a molding tool 300. For example, the molding tool 300 being a molding cavity used for injection molding.

Further, the contact element 150 has a touchpoint 152 that is in contact with the molding tool 300, e.g. the molding cavity. This touchpoint 152 will appear later as non-over-molded area. In other words, the insert 100 can be over-molded except for the touchpoint 152 of the contact element.

As for example shown in Fig. 2, the contact element 150 can be an integral pin of the insert 100. In more detail, the contact element 150 is a pin extending from a surface of the insert.

According to an alternative, not shown in the Figures, the contact element can be a pin extending form the molding tool. Thus, a touchpoint located is on a surface of the insert.

Further, as shown in Fig. 1, the method can comprise method step S5: over-molding the insert with a molding material to enclose to the insert with the over-molded housing. In particular, as shown in Fig. 3, the insert 100, which is hold by the contact element 150 at the molding element 300, is over-molded with the over-molded housing 200.

As shown in Fig. 3, the insert 100 and the over-molded housing 200 are delaminated. The space between the insert 100 and the over-molded housing 200 is typically in the range of 1 µm to 100 µm. Through this space, media such as fluids and/or particles may enter.

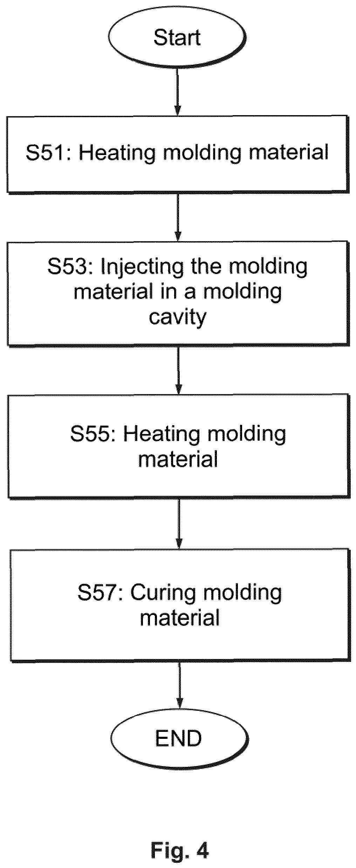

Fig. 4 describes by way of example a process for over-molding the insert. In particular, Fig. 4 describes an injection molding process. The molding material is inserted in step S53 in a molding cavity of the molding tool 300 for enclosing the insert 100. The molding material can be in solid state, e.g. particles such as a granulate, or in liquid state. During injecting the molding material, the insert 100 is hold in the molding cavity by the contact element.

According to one example, in a first optional step, the molding material is heated in step S51 to become liquid before injecting. Then, the heated molding material is inserted in step S53 in a molding cavity of the molding tool 300 for enclosing the insert 100.

Alternatively, for example if the molding material is a granulated, the molding material is first inserted in step S53 and then heated in step S55 in the molding cavity.

Further, the molding material is cured in step S57 to form the over-molded housing. For example, in case the molding material has been heated in one of steps S51 and S55, the molding material can be cured by cooling down. Additionally or alternatively, the molding material may be cured by a chemical process or by radiation, e.g. ultra violet radiation.

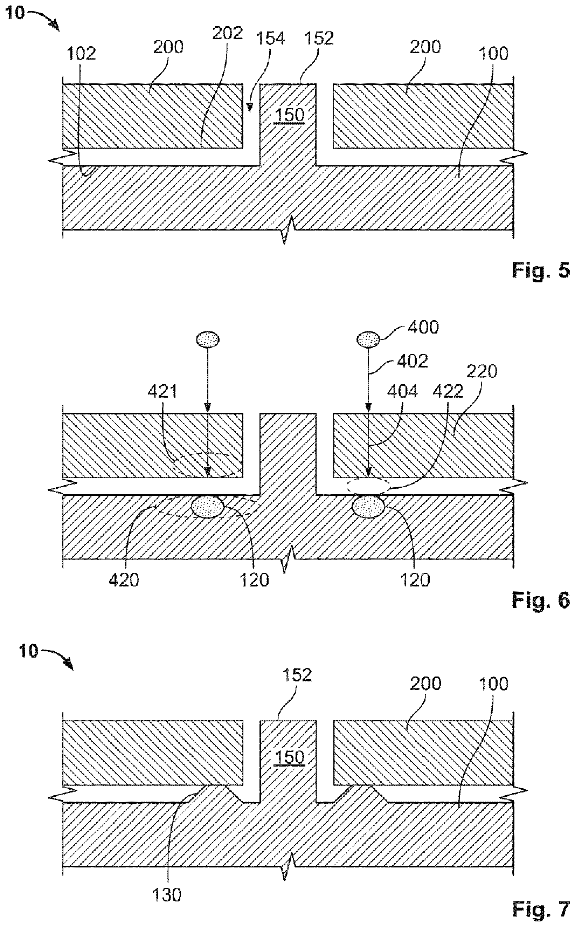

Fig. 5 shows a schematic of a molded part 10, which is fabricated in line with steps S1, S3, and S5. In particular, the over-molded housing 200 encloses the insert 100 except for the touchpoint 152 of the contact element 150. Further, an outer surface 102 of the insert 100 is delaminated from an inner surface 202 of the over-molded housing 200 facing the outer surface 102. Thus, media such as fluids or particles can enter between the insert 100 and the over-molded part 200. In particular, water can enter via the opening 154 abutting to the not over-molded touchpoint 152 of the contact element 150.

As further shown in Fig. 1, the method comprises the step of welding S7. Within the welding step, a radiation source 400 is used to weld the insert to the over-molded housing to form a fusion zone 130. The fusion zone 130 joins the insert 100 and the over-molded housing 200.

In particular, Fig. 6 shows a molded part 10 during the welding step. In particular, the radiation source 400 emits radiation 402. For example, the radiation source emits light with a wavelength larger equal 630 nm and less equal 1100 nm.

Further, according to the example shown in Fig. 6, the over-molded housing has a transparent layer 220 for guiding the radiation 404 to an opaque layer 120 formed in the insert 100. In particular, the transparent layer 220 comprises material allowing radiation emitted by the radiation source to pass through the material without appreciable scattering of the radiation. Thus, the radiation 404 is not substantially absorbed by the transparent layer 220. In other words, the transparent layer 220 guides the majority of the radiation 404 to the opaque layer 404. Notably, a minor part of the radiation may be scattered or absorbed even in the transparent layer. However, the absorbed radiation is not sufficient to melt the transparent layer 220.

In other words, transparent means that a part of the radiation emitted by the radiation source is guided through the layer. For example, down to 10 % of the radiation emitted by radiation source 400 may be guided through the layer 220, which thus is transparent. The material and the thickness of the layer 220 may be chosen so that the layer 220 becomes transparent for a radiation source having for example a wavelength larger equal 630 nm and less equal 1100 nm.

Further, according to the example shown in Fig. 6, the opaque layer 120 comprises material for absorbing the radiation of the radiation source 400. The absorption process transfers the radiation energy in thermal energy heating the opaque layer 120.

Further, according to an example shown in Fig. 6, the insert 100 comprises the region 420, which comprises reversible material. The region 420 is close to or comprises the opaque layer. Thus, by heating the opaque layer 120, heat is conducted to the region 420, thereby heating the reversible material. Further, the thermal energy is sufficient to melt the reversible material, and thus, a fusion zone is formed.

Fig. 7 shows an example of the molded part comprising the fusion zone 130, which joins the insert 100 and the over-molded housing 200.

Further, after curing, the fusion zone 130 seals the insert 100 from the touchpoint 152 of the contact element 150. Thus, the method enables sealing of the insert 100 against media in the over-molded housing 200. For example, the method enables waterproof sealing of the insert.

Further, according to an example shown in Fig. 6, the over-molded housing comprises region 421, which comprises reversible material. By heating the opaque layer 120, heat is transported, e.g. by conduction or radiation, to region 421. Thus, the reversible material melts and forms the fusion zone 130.

Further, according to a further example shown in Fig. 6, the reversible material is provided between the insert and the over-molded housing in the region 422. By heating the opaque layer 120, heat is transported, e.g. by conduction, to region 422. Thus, the reversible material melts and forms the fusion zone 130.

Further, according a not shown example, the reversible material can be provided between the insert and the over-molded housing in the region 422, which is opaque. Thus, the reversible material melts directly and forms the fusion zone 130.

As shown in Figs. 5 to 7, an outer surface 102 of the insert 100 becomes in the welding process a first faying surface and an inner surface 202 of the over-molded housing 200 facing the outer surface 102 becomes a second faying surface. As used herein, a faying surface is one of the surfaces that are in contact at a joint, i.e. the fusion zone 130.

Notably, the surfaces 102 and 202 are indicated as flat surface. A person skilled in the art understands that the surface may comprise ribs, i.e. being structured, or having a micro/macro structured surface, i.e. being a rough surface. In particular, the described method enables to connect rough and/or structured surfaces.

As described with reference to Fig. 6, at least one of the first faying surface, the second faying surface, and reversible material between the first faying surface and the second faying surface is melting due to the welding process. According to an example, the first and the second faying surface melt during the welding process.

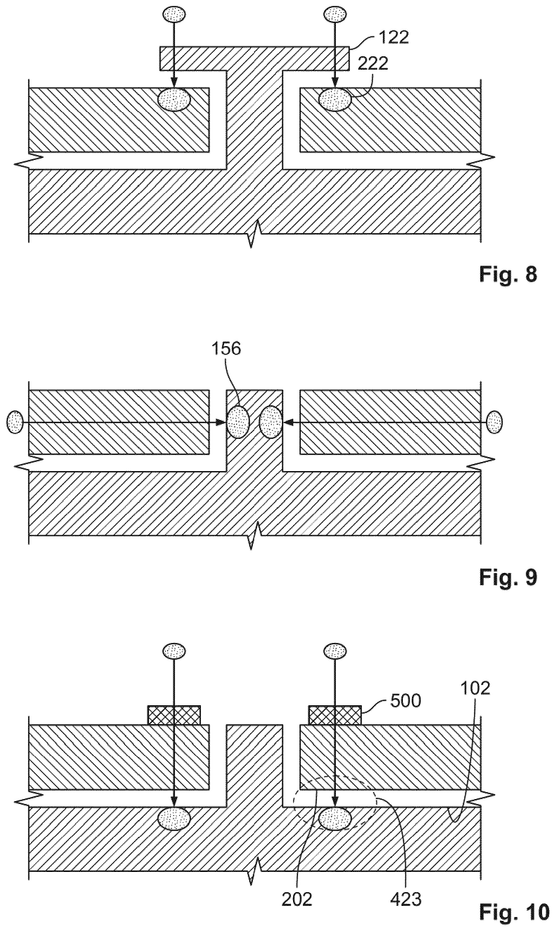

The arrangement of Fig. 6 may be further modified. For example, as shown in Fig. 8, the insert can have a transparent layer 122 for guiding the radiation to an opaque layer 222 formed in the over-molded housing. Alternatively, a lateral surface 156 of the contact element 150 facing the over-molded housing, as shown in Fig. 9, may be an opaque layer for absorbing the radiation. Notably, in Fig. 9 the radiation is guided through a transparent layer of the over-molded housing. Using a transparent layer enables to protect the fusion zone from external influences.

According to a not shown example, the contact element may be heated with light not being guided through a transparent layer but entering, for example, through the opening 154 between the touchpoint 152 and the over-molded housing.

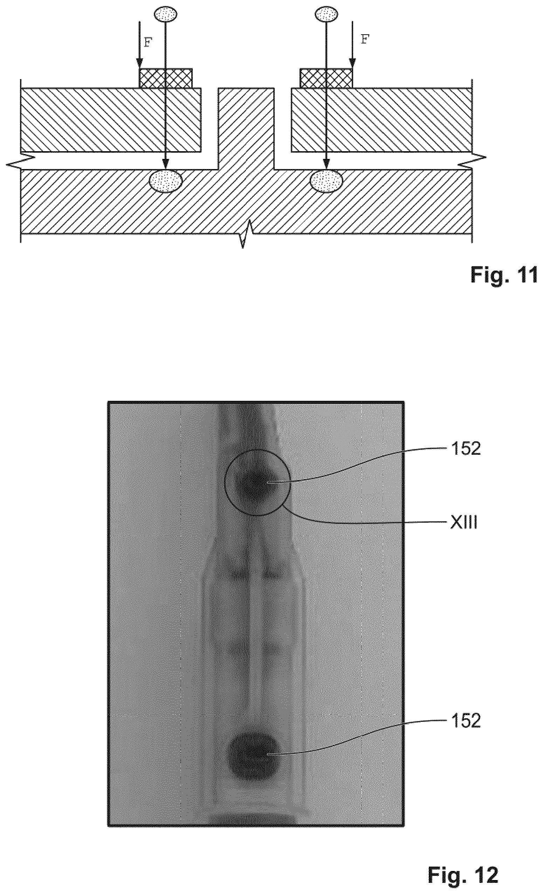

According to a further aspect, the method may comprise a further step of pressing, during the welding step, the over-molded housing to the insert to reduce a gap between the molding housing and the insert in a welding region as shown in Figs. 10 and 11.

In particular, as shown in Fig. 10, the over-molding part can be provided with a transparent element 500. Light emitted by the radiation source is guided through the transparent element 500. Further, as shown in Fig. 11, the method comprises the step of pressing, during the welding step, the over-molded housing to the insert. Thus, a gap, e.g. gap caused by delamination, between the molding housing and the insert in a welding region 423 is reduced. The welding region comprises at least one of the faying surfaces 102 and 202, wherein the distance between the faying surfaces 102 and 202 is reduced by the additional pressure.

Fig. 12 shows a molded part 10 according to an example. The molded part 10 comprises two touchpoints 152 that are not over molded. As shown in Fig. 12, the insert is partly shining through the transparent over molded housing.

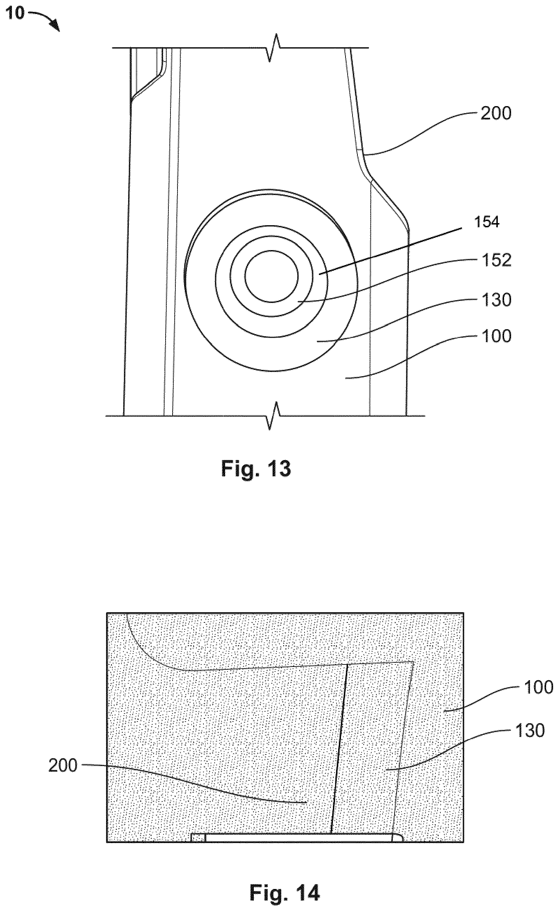

The detail XIII of Fig. 12 is shown as a schematic in Fig. 13. In particular, as shown in Fig. 13, the molded part 10 comprises an insert 100 for holding an electrical component. The insert 100 is shining through the transparent over molded housing 200. The insert 100 comprises a touchpoint 152 for position the insert 100 in a not shown molding tool during an over-molding process. In particular, the touchpoint 152 is arranged at contact element, e.g. a pin extending from a surface of the insert 100. The touchpoint 152 is not over molded by the housing 200. Further, between the touchpoint 152 and the housing 200 is an opening 154. Through this opening 154 media can enter.

Further, the over-molded housing 200 encloses the insert 100 for protecting the electrical component. In particular, the over-molded housing 200 is transparent for optical light so that the insert 100, which is opaque for optical light, is optical visible. A person skilled in the art understand that the insert 100 does not have to be optically visible. For example, insert may be opaque for the light emitted by the radiation source.

Further, the molded part comprises a fusion zone 130. The fusion zone comprises a reversible material, wherein the fusion zone joins the insert to the molded housing to seal the insert 100 from the touchpoint 152. In particular, the fusion zone forms a closed path, e.g. an annular ring or an elliptical ring, on the surface of the insert 100 around the pin. Thus, media entering through opening 154 are blocked by the fusion zone 130.

Fig. 14 shows the fusion zone 130 in a cross section. In particular, the fusion zone 130 is abutting to the insert 100 and the over-molded housing 200. According to the present example, the insert 100 is made from an opaque material and the over-molded housing 200 is made from a transparent material. The fusion zone 130 shows a transition region comprising the opaque material and the transparent material.

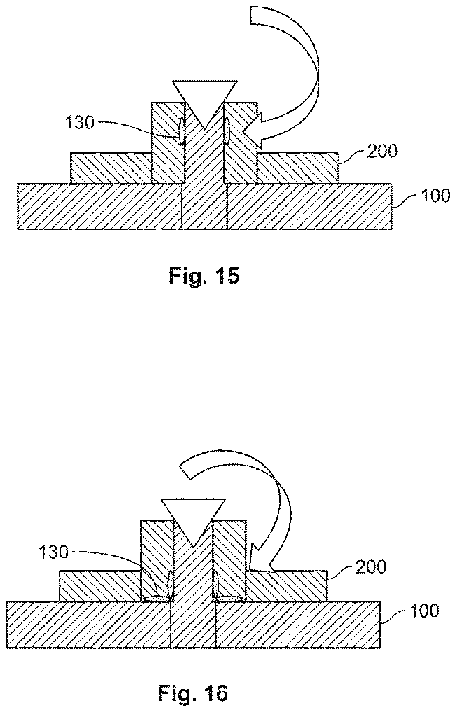

The arrangement of Fig. 6 may be further modified. For example, similar to the arrangement of Fig. 9, the insert 100 may comprise a pin. The over-molded housing 200 may surround the pin, i.e. the over-molded housing 200 may comprise a cylinder part surrounding the pin. A lateral surface of the pin forming the contact element facing the cylindrical part of the over-molded housing 200 may be an opaque layer for absorbing the radiation. Notably, different to the arrangement to Fig. 9, the radiation is guided in Fig. 15 through a transparent layer of the cylindrically shaped over-molded housing that surrounds the pin. Thus, an extending pin arrangement may comprise the fusion region 130.

According to a further modification, shown in Fig. 16, the fusion region 130 may be formed on two surfaces having an edge, in particular the edge formed by the contact element extending from the insert 100. The radiation source may be arranged inclined relative to the normal of a surface of the insert 100 and inclined relative to the normal to a surface of the contact element. Thus, the sealing properties may be increased by welding the edge region. According to an example, the insert 100 comprises ZYTEL 77G33L, a registered trademark for a product from DuPont. In particular, the insert comprises long chain polyamide resins. Further, the over-molded housing comprises NC010, in the color: nature, NC010 being a registered trademark for product from DuPont. In particular, the over-molding material is delivered as granulate that can be used for injection molding, profile extrusion, sheet extrusion, other extrusion.

According to a not shown embodiment, at least one of a primer technics on the insert, special surface structures on a surface of the insert, special contact elements, such as retractable pins in a molding tool, coating of the housing, or melting rips at the insert may be used to further seal the insert from the touchpoint.

### REFERENCE NUMERALS

| **Reference Numeral** | **Description** |
|---|---|
| 10 | Molded part |
| 100 | Insert |
| 102 | Outer surface of the insert |
| 120, 222 | Opaque layer |
| 122 | transparent layer |
| 130 | Fusion zone |
| 150 | Contact element |
| 152 | Touchpoint |
| 154 | Opening |
| 156 | Lateral surface |
| 200 | Over-molded part |
| 202 | Inner surface of the over-molded part |
| 220 | Transparent layer |
| 300 | Molding tool |
| 400 | Radiation source |
| 402 | Emitted radiation |
| 404 | Guided radiation |
| 420 to 423 | Region |
| 500 | Transparent element |

## Claims

1. Method for sealing of an insert (100) in an over-molded housing (200) against media, the method comprises the steps of:
Holding (S3) the insert at a touchpoint (152) to place the insert in a molding tool (300);
Over-molding the insert with a molding material to enclose to the insert with the over-molded housing (200); and
Welding, using a radiation source (400), the insert to the over-molded housing to form a fusion zone (130) for joining the insert (100) and the over-molded housing (200),
wherein the fusion zone comprises a reversible material, the reversible material to be melt when heated by the radiation source and to seal, when cured, the insert from the contact element,
**characterised in that**
the welding step further comprises guiding radiation emitted by the radiation source through a transparent layer and absorbing radiation emitted by the radiation source in an opaque layer.

2. Method according to claim 1, wherein the insert comprises the reversible material.

3. Method according to any of the preceding claims, wherein the over-molded housing comprises the reversible material.

4. Method according to any of the preceding claims, wherein the reversible material comprises a thermoplastic.

5. Method according to any of the preceding claims, wherein the over-molding step further comprises:
Injecting (S53) the molding material in a molding cavity of the molding tool for enclosing the insert, the insert being hold, during the injecting, in the molding cavity at the touchpoint; and Curing (S57) the molding material to form the over-molded housing.

6. Method according to any of the preceding claims, wherein the
Molding material is heated (S55) before curing, optionally wherein the molding material is heated(S51) before injecting in the molding cavity.

7. Method according to any of the preceding claims, wherein the insert is fabricated by a molding process.

8. Method according to any of the preceding claims, wherein the over-molded housing (200) comprises the transparent layer (220) for guiding the radiation to the opaque layer (120) comprised in the insert (100).

9. Method according to any of the preceding claims, wherein the reversible material is opaque for radiation emitted by the radiation source so that the reversible material is directly heated by absorbing the radiation of the radiation source, optionally wherein the radiation source emits light with a wavelength larger equal 630 nm and less equal 1000 nm.

10. Method according to any of the preceding claims, further comprising the step of:
Pressing, during the welding step, the over-molded housing to the insert to reduce a gap between the over-molded housing and the insert in a welding region.

11. Method according to claim 10, further comprising the step of
Providing a transparent element (500), during pressing the molding housing to the insert, and
Guiding radiation emitted by the radiation source through the transparent element.

## Patentansprüche

1. Verfahren zum Abdichten eines Einsatzes (100) in einem umspritzten Gehäuse (200) gegen Medien, wobei das Verfahren die folgenden Schritte umfasst:
Halten (S3) des Einsatzes an einem Berührungspunkt (152), um den Einsatz in einem Formwerkzeug (300) zu platzieren;
Umspritzen des Einsatzes mit einem Formmaterial, um den Einsatz mit dem umspritzten Gehäuse (200) zu umschließen; und
Schweißen des Einsatzes an das umspritzte Gehäuse unter Verwendung einer Strahlungsquelle (400), um eine Fusionszone (130) zum Verbinden des Einsatzes (100) und des umspritzten Gehäuses (200) zu bilden,
wobei die Fusionszone ein reversibles Material umfasst, wobei das reversible Material schmelzen soll, wenn es durch die Strahlungsquelle erhitzt wird, und, wenn es ausgehärtet ist, den Einsatz gegenüber dem Kontaktelement abdichten soll,
**dadurch gekennzeichnet, dass** der Schweißschritt ferner das Führen von durch die Strahlungsquelle emittierter Strahlung durch eine transparente Schicht und das Absorbieren von durch die Strahlungsquelle emittierter Strahlung in einer opaken Schicht umfasst.

2. Verfahren nach Anspruch 1, wobei der Einsatz das reversible Material umfasst.

3. Verfahren nach einem der vorhergehenden Ansprüche, wobei das umspritzte Gehäuse das reversible Material umfasst.

4. Verfahren nach einem der vorhergehenden Ansprüche, wobei das reversible Material einen Thermoplast umfasst.

5. Verfahren nach einem der vorhergehenden Ansprüche, wobei der Überformungsschritt ferner umfasst:
Einspritzen (S53) des Formmaterials in einen Formhohlraum des Formwerkzeugs zum Einschließen des Einsatzes, wobei der Einsatz während des Einspritzens im Formhohlraum am Berührungspunkt gehalten wird; und
Aushärten (S57) des Formmaterials, um das überformte Gehäuse zu bilden.

6. Verfahren nach einem der vorhergehenden Ansprüche, wobei das
Formmaterial vor dem Aushärten erhitzt wird (S55), wobei das Formmaterial optional vor dem Einspritzen in den Formhohlraum erhitzt wird (S51).

7. Verfahren nach einem der vorhergehenden Ansprüche, wobei der Einsatz durch ein Formverfahren hergestellt wird.

8. Verfahren nach einem der vorhergehenden Ansprüche, wobei das umspritzte Gehäuse (200) die transparente Schicht (220) zum Leiten der Strahlung zu der undurchsichtigen Schicht (120) umfasst, die in dem Einsatz (100) enthalten ist.

9. Verfahren nach einem der vorhergehenden Ansprüche, wobei das reversible Material für die von der Strahlungsquelle emittierte Strahlung undurchsichtig ist, so dass das reversible Material durch Absorption der Strahlung der Strahlungsquelle direkt erwärmt wird, wobei die Strahlungsquelle gegebenenfalls Licht mit einer Wellenlänge größer gleich 630 nm und kleiner gleich 1000 nm emittiert.

10. Verfahren nach einem der vorhergehenden Ansprüche, das ferner den folgenden Schritt umfasst:
während des Schweißschritts das umspritzte Gehäuse an den Einsatz zu pressen, um einen Spalt zwischen dem umspritzten Gehäuse und dem Einsatz in einem Schweißbereich zu verringern.

11. Verfahren nach Anspruch 10, das ferner den Schritt umfasst,
während des Pressens des umspritzten Gehäuses an den Einsatz ein transparentes Element (500) bereitzustellen und
von der Strahlungsquelle emittierte Strahlung durch das transparente Element zu leiten.

## Revendications

1. Procédé d'étanchement aux fluides d'un insert (100) dans un boîtier surmoulé (200), le procédé comprenant les étapes suivantes :
maintien (S3) de l'insert à un point de contact (152) pour placer l'insert dans un outil de moulage (300) ;
surmoulage de l'insert avec un matériau de moulage pour enfermer l'insert avec le boîtier surmoulé (200) ; et
soudage, à l'aide d'une source de rayonnement (400), de l'insert sur le boîtier surmoulé pour former une zone de fusion (130) de manière à assembler l'insert (100) et le boîtier surmoulé (200),
dans lequel la zone de fusion comprend un matériau réversible, le matériau réversible devant fondre quand il est chauffé par la source de rayonnement et réaliser une étanchéité, une fois durci, entre l'insert et l'élément de contact,
**caractérisé en ce que**
l'étape de soudage comprend en outre le guidage du rayonnement émis par la source de rayonnement à travers une couche transparente et l'absorption du rayonnement émis par la source de rayonnement dans une couche opaque.

2. Procédé selon la revendication 1, dans lequel l'insert comprend le matériau réversible.

3. Procédé selon l'une quelconque des revendications précédentes, dans lequel le boîtier surmoulé comprend le matériau réversible.

4. Procédé selon l'une quelconque des revendications précédentes, dans lequel le matériau réversible comprend un thermoplastique.

5. Procédé selon l'une quelconque des revendications précédentes, dans lequel l'étape de surmoulage comprend en outre :
l'injection (S53) du matériau de moulage dans une cavité de moulage de l'outil de moulage pour enfermer l'insert, l'insert étant maintenu, durant l'injection, dans la cavité de moulage au point de contact ; et
le durcissement (S57) du matériau de moulage pour former le boîtier surmoulé.

6. Procédé selon l'une quelconque des revendications précédentes, dans lequel le matériau de moulage est chauffé (S55) avant le durcissement, éventuellement dans lequel le matériau de moulage est chauffé (S51) avant l'injection dans la cavité de moulage.

7. Procédé selon l'une quelconque des revendications précédentes, dans lequel l'insert est fabriqué par un procédé de moulage.

8. Procédé selon l'une quelconque des revendications précédentes, dans lequel le boîtier surmoulé (200) comprend la couche transparente (220) pour guider le rayonnement vers la couche opaque (120) comprise dans l'insert (100).

9. Procédé selon l'une quelconque des revendications précédentes, dans lequel le matériau réversible est opaque au rayonnement émis par la source de rayonnement de telle sorte que le matériau réversible est directement chauffé en absorbant le rayonnement de la source de rayonnement, éventuellement dans lequel la source de rayonnement émet de la lumière ayant une longueur d'onde supérieure ou égale à 630 nm et inférieure ou égale à 1000 nm.

10. Procédé selon l'une quelconque des revendications précédentes, comprenant en outre l'étape consistant à :
presser, durant l'étape de soudage, le boîtier surmoulé sur l'insert afin de réduire un intervalle entre le boîtier surmoulé et l'insert dans une région de soudage.

11. Procédé selon la revendication 10, comprenant en outre l'étape consistant à :
fournir un élément transparent (500), durant le pressage du boîtier de moulage sur l'insert, et
guider le rayonnement émis par la source de rayonnement à travers l'élément transparent.
